# EUROPEAN PATENT SPECIFICATION

(11) **EP 3 686 650 B1**
(45) Date of publication and mention of the grant of the patent: **23.07.2025**
(21) Application number: 19465504.9
(22) Date of filing: 23.01.2019
(51) Int. Cl.: G02B 27/01, G02B 7/00

(54) **HOUSING ASSEMBLY FOR A HEAD-UP DISPLAY**
GEHÄUSEANORDNUNG FÜR EINE HEAD-UP-ANZEIGE
ENSEMBLE BOÎTIER POUR UN AFFICHAGE TÊTE HAUTE

(43) Date of publication of application: 29.07.2020
(73) Proprietor: Continental Automotive Technologies GmbH, 30175 Hannover (DE)
(72) Inventor: Novac, Andrei, 210201 Targu-Jiu (RO); Pantea, Cristian, 415600 Stei (RO)
(74) Representative: Continental Corporation

(56) References cited:
- EP-A1- 2 957 947
- WO-A2-2008/052178
- DE-A1- 102007 010 381
- DE-A1- 3 911 696

## Description

The present invention is related to a housing assembly for an apparatus for generating a virtual image. The invention is further related to an apparatus for generating a virtual image, which makes use of such a housing assembly, and to a vehicle comprising such an apparatus.

A head-up display, also referred to as a HUD, is a display system in which the viewer can maintain his viewing direction, because the contents to be displayed are displayed in his field of vision. While such systems, due to their complexity and costs, were originally mainly used in the aviation sector, they are now also being used in large scale in the automotive sector.

Head-up displays generally consist of an image generator, an optical unit and a mirror unit. The image generator generates the image to be displayed. The optical unit directs the image to the mirror unit. The image generator is often referred to as an imaging unit or PGU (Picture Generating Unit). The mirror unit is a partially reflecting, translucent pane. The viewer thus sees the content displayed by the image generator as a virtual image and at the same time the real world behind the translucent pane. In the automotive sector, the windscreen often serves as a mirror unit, the curved shape of which must be taken into account in the representation. Through the interaction of the optical unit and the mirror unit, the virtual image is an enlarged representation of the image generated by the image generator.

The image generator and the optical unit of a head-up display are typically arranged in a common housing assembly, which may also include electronic components necessary for operation of the head-up display. The housing assembly is sealed with a cover glass and protects the various components from damage as well as dust or other environmental influences. Furthermore, the housing assembly helps to simplify mounting of the head-up display in a vehicle, as all necessary components can be installed in a single production step.

The housing assembly usually consists of a lower housing and an upper housing, which are fastened to each other once all the necessary components of the head-up display have been mounted in their respective positions. The connection between the lower housing and the upper housing is at present typically realized using screws or rivets.

When the upper housing is fastened to the lower housing by screws or rivets, the housing assembly may suffer warpage and bending when it is exposed to higher temperatures, due to thermal expansion of the housing assembly. This may occur, for example, when a vehicle with a head-up display is parked in the sunlight. Such warpage and bending may cause defects in the displayed virtual image, which are not acceptable to a viewer.

EP 2 957 947 A1 relates to an image generating unit for a head-up display and to a head-up display comprising such an image generating unit.

DE 10 2007 010381 A1 relates to a head-up display for a motor vehicle for mounting in the dashboard area behind an instrument cluster, comprising a housing with functional components arranged therein or thereon.

WO 2008/052178 A2 relates to the field of vehicle vision systems for viewing objects within and outside of a vehicle cabin.

DE 39 11 696 A1 relates to a housing for a connector. The housing has a rectangular casing consisting of two parts, which are held together via spring clips. The two opposing sides of the casing have thickened wall sections to the left and right of the spring clips. These provide reception spaces for the latter. The spring clips have projecting hooked sections, which lock into corresponding openings in the cover.

It is an object of the present invention to provide an improved solution for a housing assembly that is suitable for an apparatus for generating a virtual image.

This object is achieved by a housing assembly according to claim 1. The dependent claims include advantageous further developments and improvements of the present principles as described below.

According to one aspect of the invention, a housing assembly for an apparatus for generating a virtual image comprises a lower housing and an upper housing. The lower housing comprises support structures for installation of an image generator or an optical unit of the apparatus for generating a virtual image. The upper housing comprises a support surface configured to carry a cover glass. The upper housing is fastened to the lower housing by at least one flat metal spring clip. The flat metal spring clip is mounted on the housing assembly at respective fastening points of the lower housing and the upper housing.

As head-up displays are getting increasingly larger, the warpage and bending effects caused by thermal expansion, in particular the warping of the cover glass, are more likely to appear. Connecting the upper housing and the lower housing with flat metal spring clips has the advantage that the housing assembly is capable of compensating for thermal expansion. As a result, defects in the displayed image are eliminated to a large extent. Using a flat metal spring clip further has the advantage that the spring clip does hardly suffer any degradation by aging effects, e.g. due to an exposure to sunlight.

A further advantage is that the spring clips are easily mountable and demountable, both by hand or by using an automated process. In addition, the assembly using spring clips is simpler and cheaper than the assembly using screws.

When the upper housing and the lower housing are fastened by screws, typically self-tapping screws are used to eliminate the tapping process. On the one hand, this means that free particles are generated when the screws are fastened, which may cause the head-up display to fail during a cleanliness test. On the other hand, after mounting and demounting the screws for a couple of times, e.g. for accessing the components inside the housing for maintenance or repair, the threads are damaged. In contrast, the clips can be mounted and demounted repeatedly for hundreds of times without damaging the upper housing or the lower housing or generating any particles.

Also, in case of an assembly using rivets, a special tool is required for demounting the rivets. In addition, new rivets are needed for reassembly. This is not the case when spring clips are used.

In one advantageous embodiment, the at least one spring clip is made of an austenitic stainless steel. Preferably, the austenitic stainless steel is X10CrNi18-8, i.e. steel with 16,0 to 19,0 wt% (weight percent) Chrome and 6,0 to 9,5 wt% Nickel. This material is often used for springs, so that extensive knowledge about the design and properties of such springs exists.

In one advantageous embodiment, the spring force of the at least one spring clip is between 9 N and 23 N. It has been found that such values of the spring force ensure that the two parts of the housing assembly are securely connected. At the same time the values are sufficiently small to allow removing the spring clips, e.g. for repair of a component inside the housing assembly, with exertion of only a moderate force. The preferable spring force may depend on the type of spring clip that is used.

In one advantageous embodiment, a width of the at least one spring clip is between 5 mm and 9 mm. These values ensure that the desired spring force can easily be achieved. At the same time only a limited installation space is required for the spring clips, which gives greater flexibility for the design of the housing assembly.

In one advantageous embodiment, the upper housing is fastened to the lower housing by four spring clips. Using four spring clips for fastening the two parts of the housing assembly ensures that the housing assembly is tightly closed. At the same time the number of spring clips is sufficiently small to keep the time required for assembly relatively low, which reduces the overall cost of assembly.

In one advantageous embodiment, the upper housing is fastened to the lower housing by two spring clips each at or close to two opposite sides of the housing assembly. Preferably, the two opposite sides are the longer sides of the housing assembly. The thermal effects caused by the irradiation with sunlight are most pronounced along the longer sides of the housing assembly. Fastening the two parts of the housing assembly at or close to these longer sides ensures that thermally induced strain can be efficiently relaxed.

In one advantageous embodiment, the upper housing is fastened to the lower housing by two spring clips at one side of the housing assembly and one or more lugs hooking into corresponding holes at the opposite side of the housing assembly. This solution has the advantage that the number of parts to be assembled as well as the time required for assembly are reduced. As a consequence, the cost of assembly is likewise reduced.

According to one aspect of the invention, an apparatus for generating a virtual image comprises:
- an image generator for generating an image;
- an optical unit for directing the image to a mirror unit for generating the virtual image; and
- a housing assembly according to the invention, which accommodates at least the image generator and the optical unit.

Such an apparatus is advantageous in that it is relatively inexpensive to produce. At the same time, it is less susceptible to warpage and bending caused by thermal effects. The apparatus is hence well suited for use in an environment in which higher temperatures occur, e.g. in a motor transport vehicle.

According to one aspect of the invention, a vehicle comprises an apparatus according to the invention for generating a virtual image for a user of the vehicle. The vehicle may, for example, be a car or an aircraft. Of course, the inventive solution can also be used in other environments or for other applications, e.g. in trucks, busses, in railway and public transport, cranes and construction machinery, etc.

Further features of the present invention will become apparent from the following description and the appended claims in conjunction with the figures.

Figures
- Fig. 1: shows a sketch of a state-of-the-art head-up display for a motor vehicle;
- Fig. 2: shows a perspective view of a lower housing of a housing assembly according to the invention;
- Fig. 3: shows a perspective view of an upper housing of a housing assembly according to the invention;
- Fig. 4: shows a top view of the upper housing of Fig. 3;
- Fig. 5: shows a perspective view of a first embodiment of a spring clip for fastening the upper housing and the lower housing;
- Fig. 6: shows a side view of the spring clip of Fig. 5;
- Fig. 7: shows a side view of a second embodiment of a spring clip for fastening the upper housing and the lower housing; and
- Fig. 8: shows the connection of the upper housing and the lower housing in greater detail.

### Detailed description

For a better understanding of the principles of the present invention, embodiments of the invention will be explained in more detail below with reference to the figures.

Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

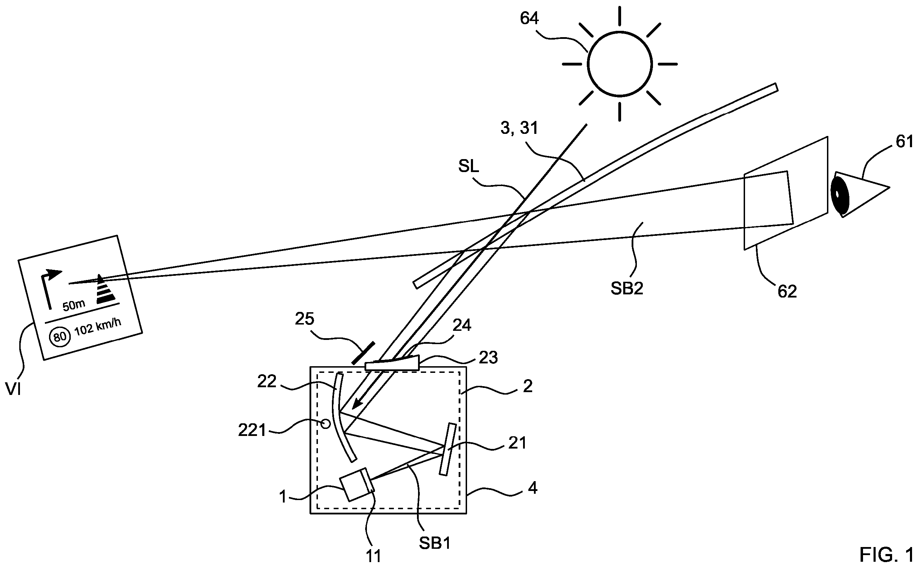

Fig. 1 shows a sketch of a state-of-the-art head-up display for a motor vehicle. The head-up display has an image generator 1, an optical unit 2 and a mirror unit 3. A beam SB1 emanates from a display element 11 of the image generator 1 and is reflected by a folding mirror 21 onto a curved mirror 22, which reflects it in the direction of the mirror unit 3. The mirror unit 3 is shown here as a windscreen 31 of the motor vehicle. From there, the SB2 beam is directed towards the eye 61 of an observer.

The observer sees a virtual image VI, which is located outside the vehicle above the bonnet or even in front of the vehicle. Due to the interaction of the optical unit 2 and the mirror unit 3, the virtual image VI is an enlarged representation of the image displayed by the display element 11. Here a symbolic speed limit, the current vehicle speed and navigation instructions are displayed. As long as the eye 61 is inside the eyebox 62 indicated by a rectangle, all elements of the virtual image are visible to the eye 61. If the eye 61 is located outside the eyebox 62, the virtual image VI is only partially or not at all visible to the viewer. The larger the eyebox 62 is, the less restricted the viewer is in his choice of the seating position.

The curvature of the curved mirror 22 is adapted to the curvature of the windscreen 31 and ensures that the image distortion is stable over the entire eyebox 62. The curved mirror 22 is rotatably supported by a bearing 221. By rotating the curved mirror 22, it is possible to shift the eyebox 62 and thus to adjust the position of the eyebox 62 to the position of the eye 61. The folding mirror 21 ensures that the distance travelled by the beam SB1 between the display element 11 and the curved mirror 22 is long, while at the same time the optical unit 2 remains compact. The optical unit 2 and the image generator 1 are accommodated in a housing assembly 4 and separated from the environment by a transparent cover 23. The optical elements of the optical unit 2 are thus protected, for example, against dust inside the vehicle. An optical foil or polarizer 24 is located on the cover 23. The display element 11 is typically polarized and the mirror unit 3 acts like an analyzer. The purpose of the polarizer 24 is, therefore, to influence the polarization such as to achieve a uniform visibility of the useful light. An anti-glare shield 25 serves to securely absorb light reflected across the interface of the cover 23 so that no glare is caused to the observer. In addition to sunlight SL, also light from another source of interference 64 might reach the display element 11. In combination with a polarization filter, the polarizer 24 can also be used to suppress incident sunlight SL.

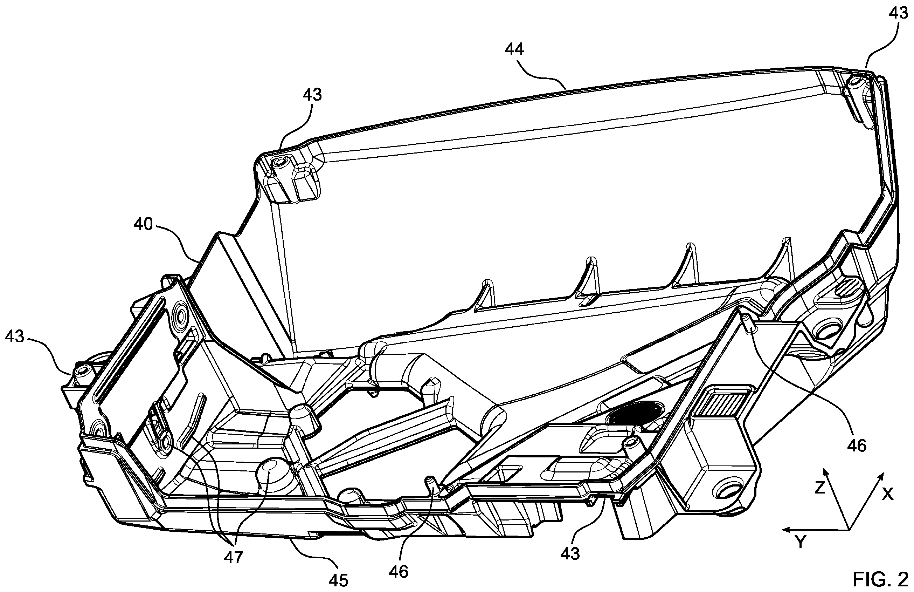

Fig. 2 shows a perspective view of a lower housing 40 of a housing assembly according to the invention. Depicted is a view into the inside of the lower housing 40. In this embodiment, the housing assembly is fastened using four spring clips. Therefore, the lower housing 40 is provided with four fastening points 43. Two fastening points 43 are located at a first side 44 of the lower housing 40. A further fastening point 43 is located at a second side 45 opposite to the first side 44. Due to constraints with regard to the available installation space, the fourth fastening point 43 is not located at the second side 45, but close to this side 45. In this embodiment, the first side 44 and the second side 45 are the longer sides of the housing assembly. Several alignment pins 46 are provided, which interact with corresponding alignment holes of the upper housing to facilitate alignment of the upper housing 41 and the lower housing during assembly. Inside the lower housing 40 a plurality of support structures 47 can been, e.g. for installation of the image generator or the optical unit.

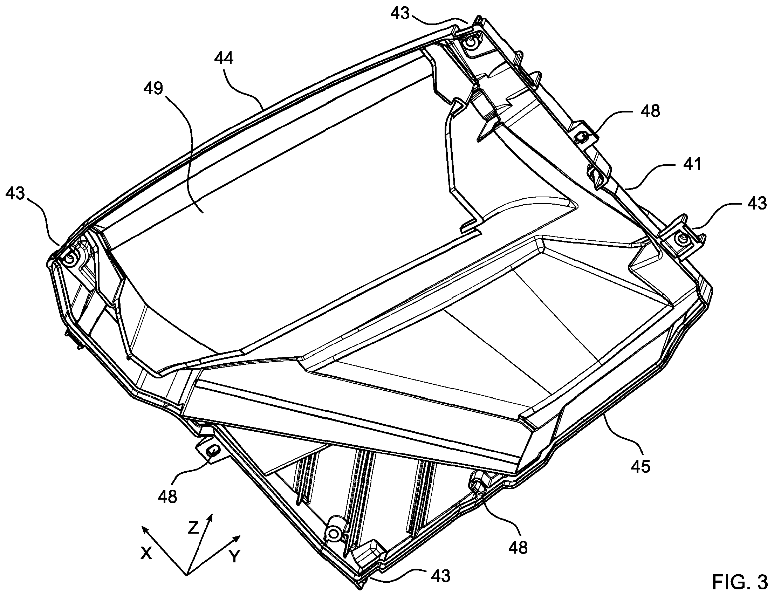

Fig. 3 shows a perspective view of an upper housing 41 of a housing assembly according to the invention. Depicted is a view into the inside of the upper housing 41. In addition to the four fastening points 43 for the spring clips, there are three alignment holes 48, into which the corresponding alignment pins of the lower housing are inserted during assembly. An opening 49 is provided in the top side of the upper housing 41. Light generated by the image generator and relayed by the optical unit leaves the housing assembly through this opening 49.

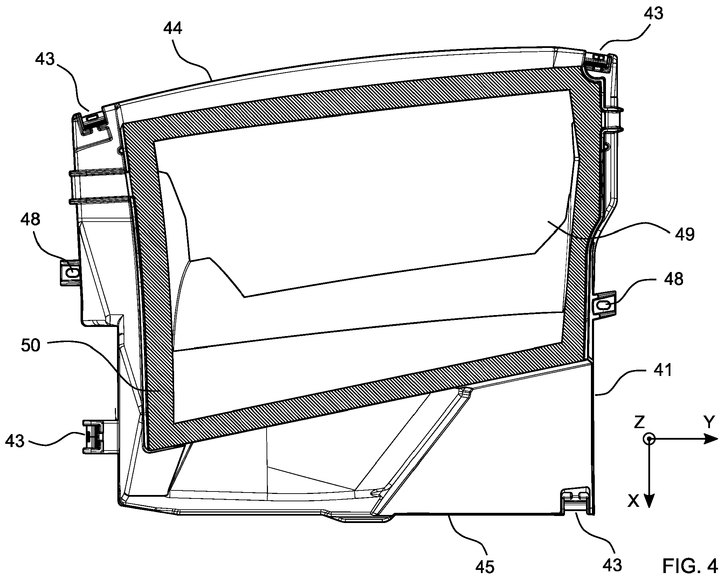

Fig. 4 shows a top view of the upper housing 41 of Fig. 3. As can be seen, the opening 49 is surrounded by a support surface 50, which is designated by the hatched area. The purpose of the support 50 surface is to carry the cover glass and may be structured in order to improve the bonding properties when the cover glass is glued to the upper housing 41.

According to above embodiment, the upper housing is fastened to the lower housing by four spring clips. It is, however, likewise possible to use two spring clips at one side of the housing assembly and one or more lugs hooking into corresponding holes at the opposite side of the housing assembly.

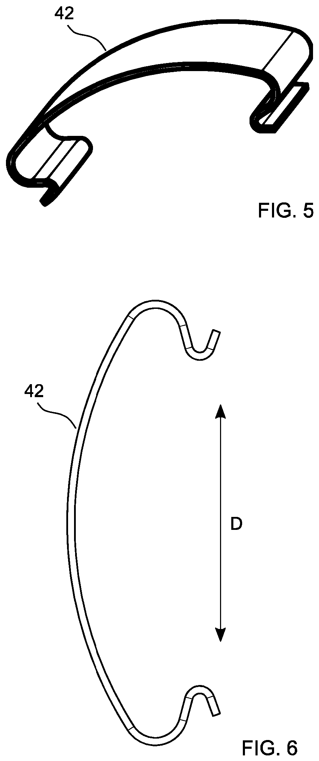

Fig. 5 shows a perspective view of a first embodiment of a spring clip 42 for fastening the upper housing and the lower housing. Fig. 6 shows a side view of this spring clip 42. The spring clip 42 is preferably made of an austenitic stainless steel, e.g. X10CrNi18-8. The width of the spring clip 42 may, for example, be between 7 mm and 9 mm, whereas the height may be around 18 mm. Preferably, the thickness of the spring clip 42 is around 0,3 mm. The spring force of the spring clip 42, which in this case is measured in the measurement direction D indicated by the arrow, is between 9 N and 13 N. Preferably, the spring force is 10.6 N. The spring force may be tuned by changing the various dimensions of the spring clip 42, e.g. the curvature, the height or the depth.

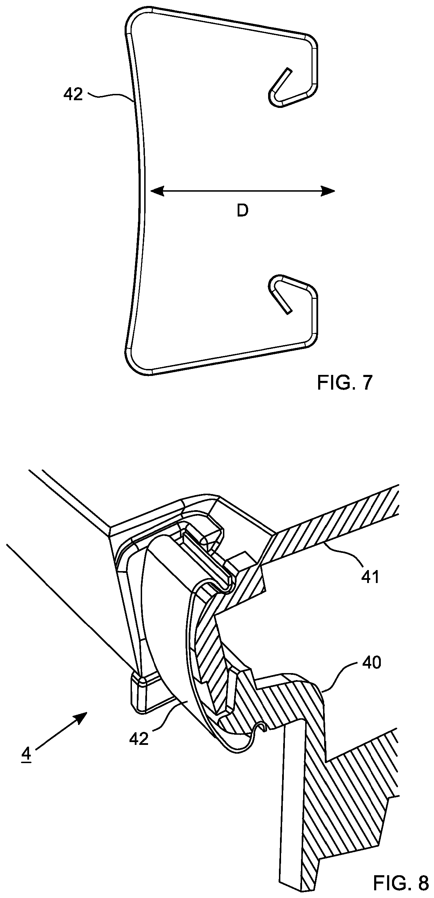

Fig. 7 shows a side view of a second embodiment of a spring clip 42 for fastening the upper housing and the lower housing. Again, the spring clip 42 is preferably made of X10CrNi18-8. The width of the spring clip 42 may, for example, be between 5 mm and 7 mm, whereas the height may be around 21 mm. Preferably, the thickness of the spring clip 42 is around 0,3 mm. The spring force of the spring clip 42, which in this case is measured in the measurement direction D indicated by the arrow, is between 15 N and 23 N. Preferably, the spring force is 19 N. The spring force may be tuned by changing the various dimensions of the spring clip 42, e.g. the curvature, the height or the depth.

Fig. 8 shows the connection of the upper housing 41 and the lower housing 40 of the housing assembly 4 in greater detail. As can be seen, the spring clip 42 firmly connects the upper housing 41 and the lower housing 40. At the same time, the spring clip 42 allows for a thermal expansion of the upper housing 41 and the lower housing 40 in all directions.

## Claims

1. A housing assembly (4) for an apparatus for generating a virtual image (VI), the housing assembly (4) comprising a lower housing (40) and an upper housing (41), wherein the lower housing (40) comprises support structures (47) for installation of an image generator (1) or an optical unit (2) of the apparatus for generating a virtual image (VI), and wherein the upper housing (41) comprises a support surface (50) configured to carry a cover glass, **characterized in that** the upper housing (41) is fastened to the lower housing (40) by at least one flat metal spring clip (42), which is mounted on the housing assembly (4) at respective fastening points (43) of the lower housing (40) and the upper housing (41).

2. The housing assembly (4) according to claim 1, wherein the at least one spring clip (42) is made of an austenitic stainless steel.

3. The housing assembly (4) according to claim 1 or 2, wherein the spring force of the at least one spring clip (42) is between 9 N and 13 N.

4. The housing assembly (4) according to one of the preceding claims, wherein a width of the at least one spring clip (42) is between 5 mm and 9 mm.

5. The housing assembly (4) according to one of claims 1 to 4, wherein the upper housing (41) is fastened to the lower housing (40) by four spring clips (42).

6. The housing assembly (4) according to claim 5, wherein the upper housing (41) is fastened to the lower housing (40) by two spring clips (42) each at or close to two opposite sides of the housing assembly (4).

7. The housing assembly (4) according to one of claims 1 to 4, wherein the upper housing (41) is fastened to the lower housing (40) by two spring clips (42) at one side of the housing assembly (4) and one or more lugs hooking into corresponding holes at the opposite side of the housing assembly (4).

8. An apparatus for generating a virtual image (VI) comprising:
- an image generator (1) for generating an image;
- an optical unit (2) for directing the image to a mirror unit (3) for generating the virtual image (VI); and
- a housing assembly (4) according to one of the preceding claims, which accommodates at least the image generator (1) and the optical unit (2).

9. A vehicle with an apparatus according to claim 8 for generating a virtual image (VI) for a user of the vehicle.

## Patentansprüche

1. Gehäuseanordnung (4) für eine Einrichtung zum Generieren eines virtuellen Bildes (VI), wobei die Gehäuseanordnung (4) ein unteres Gehäuse (40) und ein oberes Gehäuse (41) aufweist, wobei das untere Gehäuse (40) Stützstrukturen (47) zum Installieren eines Bildgenerators (1) oder einer optischen Einheit (2) der Einrichtung zum Generieren eines virtuellen Bildes (VI) aufweist, und wobei das obere Gehäuse (41) eine Stützfläche (50) aufweist, die dazu ausgebildet ist, ein Deckglas zu tragen, **dadurch gekennzeichnet, dass** das obere Gehäuse (41) durch mindestens eine flache Metallfederklammer (42) an dem unteren Gehäuse (40) befestigt ist, die an jeweiligen Befestigungspunkten (43) des unteren Gehäuses (40) und des oberen Gehäuses (41) auf der Gehäuseanordnung (4) montiert ist.

2. Gehäuseanordnung (4) nach Anspruch 1, wobei die mindestens eine Federklammer (42) aus einem austenitischen rostfreien Stahl hergestellt ist.

3. Gehäuseanordnung (4) nach Anspruch 1 oder 2, wobei die Federkraft der mindestens einen Federklammer (42) zwischen 9 N und 13 N liegt.

4. Gehäuseanordnung (4) nach einem der vorhergehenden Ansprüche, wobei eine Breite der mindestens einen Federklammer (42) zwischen 5 mm und 9 mm beträgt.

5. Gehäuseanordnung (4) nach einem der Ansprüche 1 bis 4, wobei das obere Gehäuse (41) durch vier Federklammern (42) an dem unteren Gehäuse (40) befestigt ist.

6. Gehäuseanordnung (4) nach Anspruch 5, wobei das obere Gehäuse (41) durch zwei Federklammern (42) jeweils an oder in der Nähe von zwei gegenüberliegenden Seiten der Gehäuseanordnung (4) an dem unteren Gehäuse (40) befestigt ist.

7. Gehäuseanordnung (4) nach einem der Ansprüche 1 bis 4, wobei das obere Gehäuse (41) durch zwei Federklammern (42) an einer Seite der Gehäuseanordnung (4) und eine oder mehrere Laschen, die in entsprechende Löcher an der gegenüberliegenden Seite der Gehäuseanordnung (4) einhaken, an dem unteren Gehäuse (40) befestigt ist.

8. Einrichtung zum Generieren eines virtuellen Bildes (VI), die Folgendes aufweist:
- einen Bildgenerator (1) zum Generieren eines Bildes;
- eine optische Einheit (2) zum Richten des Bildes auf eine Spiegeleinheit (3) zum Generieren des virtuellen Bildes (VI); und
- eine Gehäuseanordnung (4) nach einem der vorhergehenden Ansprüche, die zumindest den Bildgenerator (1) und die optische Einheit (2) aufnimmt.

9. Fahrzeug mit einer Einrichtung nach Anspruch 8 zum Generieren eines virtuellen Bildes (VI) für einen Benutzer des Fahrzeugs.

## Revendications

1. Ensemble boîtier (4) pour un appareil de génération d'une image virtuelle (VI), l'ensemble boîtier (4) comprenant un boîtier inférieur (40) et un boîtier supérieur (41), le boîtier inférieur (40) comprenant des structures de support (47) pour l'installation d'un générateur d'image (1) ou d'une unité optique (2) de l'appareil de génération d'une image virtuelle (VI), et le boîtier supérieur (41) présentant une surface de support (50) configurée pour supporter une glace de recouvrement, **caractérisé en ce que** le boîtier supérieur (41) est fixé au boîtier inférieur (40) par au moins une pince élastique métallique plate (42) qui est montée sur l'ensemble boîtier (4) à des points de fixation respectifs (43) du boîtier inférieur (40) et du boîtier supérieur (41).

2. Ensemble boîtier (4) selon la revendication 1, dans lequel l'au moins une pince élastique (42) est réalisée en acier inoxydable austénitique.

3. Ensemble boîtier (4) selon la revendication 1 ou 2, dans lequel la force élastique de l'au moins une pince élastique (42) est comprise entre 9 N et 13 N.

4. Ensemble boîtier (4) selon l'une des revendications précédentes, dans lequel une largeur de l'au moins une pince élastique (42) est comprise entre 5 mm et 9 mm.

5. Ensemble boîtier (4) selon l'une des revendications 1 à 4, dans lequel le boîtier supérieur (41) est fixé au boîtier inférieur (40) par quatre pinces élastiques (42).

6. Ensemble boîtier (4) selon la revendication 5, dans lequel le boîtier supérieur (41) est fixé au boîtier inférieur (40) par deux pinces élastiques (42), chacune au niveau ou à proximité de deux côtés opposés de l'ensemble boîtier (4).

7. Ensemble boîtier (4) selon l'une des revendications 1 à 4, dans lequel le boîtier supérieur (41) est fixé au boîtier inférieur (40) par deux pinces élastiques (42) sur un côté de l'ensemble boîtier (4) et une ou plusieurs pattes s'accrochant dans des trous correspondants sur le côté opposé de l'ensemble boîtier (4).

8. Appareil de génération d'une image virtuelle (VI) comprenant :
- un générateur d'image (1) pour générer une image ;
- une unité optique (2) pour diriger l'image vers une unité miroir (3) pour générer l'image virtuelle (VI) ; et
- un ensemble boîtier (4) selon l'une des revendications précédentes, qui reçoit au moins le générateur d'image (1) et l'unité optique (2).

9. Véhicule avec un appareil selon la revendication 8 pour générer une image virtuelle (VI) pour un utilisateur du véhicule.
